# DEMANDE DE BREVET EUROPEEN

(11) **EP 4 786 286 A1**
(43) Date de publication de la demande: **05.08.2026**
(21) Numéro de dépôt: 26154761.6
(22) Date de dépôt: 28.01.2026
(51) Int. Cl.: B60R 22/18

(54) **SYSTÈME DE FIXATION POUR FIXER À LA STRUCTURE D'UN VÉHICULE AUTOMOBILE UN LIEN DESTINÉ À SOUTENIR UN ÉQUIPEMENT ET VÉHICULE AUTOMOBILE ÉQUIPÉ D'UN TEL SYSTÈME DE FIXATION**

(30) Priorité: 03.02.2025 FR 2501079
(71) Demandeur: Renault s.a.s, 92100 Boulogne Billancourt (FR)
(72) Inventeur: BOUILLON, Jean-Charles, 78280 GUYANCOURT (FR); HOUARI-ZANIROLI, Pascal, 78280 GUYANCOURT (FR)

(57) **Abrégé**

L'invention concerne un système de fixation (8) pour fixer à une structure d'un véhicule automobile un lien destiné à soutenir un équipement, le système de fixation (8) comprenant :
- un dispositif de renvoi de ceinture de sécurité (9) comprenant une sangle (11) de ceinture de sécurité et un corps de renvoi (12) destiné à être fixé à la structure du véhicule, ledit corps de renvoi (12) comprenant une ouverture de guidage (13) au travers de laquelle passe la sangle (11), ladite ouverture de guidage (13) comprenant une fente centrale (17) s'étendant entre deux orifices arrondis (18, 19) ; et
- un organe d'accrochage (10) pour accrocher le lien qui est agencé pour être monté de manière amovible dans l'un des orifices arrondis (18). Figure à publier avec l'abrégé : Fig. 4

## Description

### Domaine de l'invention

L'invention a trait au domaine des véhicules automobiles.

Elle porte spécifiquement sur un système de fixation pour fixer à la structure d'un véhicule automobile un lien, comme une sangle, une corde ou un câble, destiné à soutenir un équipement, tel qu'un sommier.

### Arrière-plan technologique

Dans l'état de la technique, il existe un besoin de fixer à la structure des véhicules automobiles des liens, tel que des sangles, cordes ou câbles, permettant de soutenir des équipements.

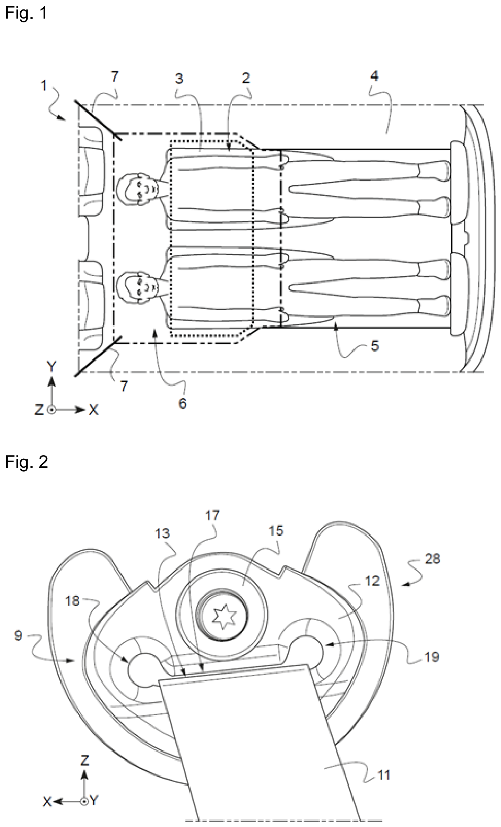

Cela est notamment le cas pour un véhicule aménagé, tel qu'illustré sur la figure 1. Ce type de véhicule est équipé d'un sommier convertible pour offrir un espace de couchage. La banquette arrière se rabat pour former un support pour un sommier. Une partie du sommier s'étend, en porte-à-faux, vers l'avant du véhicule au-delà du dossier, fournissant ainsi une surface pour soutenir la tête des utilisateurs lorsqu'ils sont allongés.

Dans une telle configuration, il s'avère ainsi nécessaire de soutenir la partie du sommier qui s'étend en porte-à-faux afin d'éviter qu'elle ne bascule vers l'avant lorsqu'un utilisateur exerce un appui sur cette zone.

### Résumé

Un problème que la présente invention vise à résoudre est de proposer un système de fixation du type précité qui soit à la fois simple, peu coûteux et capable de tenir des charges importantes.

Dans le but de résoudre ce problème, et selon un premier objet, il est proposé un système de fixation pour fixer à une structure d'un véhicule automobile un lien destiné à soutenir un équipement, le système de fixation comprenant :
- un dispositif de renvoi de ceinture de sécurité comprenant une sangle de ceinture de sécurité et un corps de renvoi destiné à être fixé à la structure du véhicule, ledit corps de renvoi comprenant une ouverture de guidage au travers de laquelle passe la sangle, ladite ouverture de guidage comprenant une fente centrale s'étendant entre deux orifices arrondis ; et
- un organe d'accrochage pour accrocher le lien qui est agencé pour être monté de manière amovible dans l'un des orifices arrondis.

Ainsi, le système de fixation est simple car **il** utilise un dispositif existant pour attacher le lien, éliminant ainsi le besoin d'installer un autre dispositif d'ancrage sur la structure du véhicule. Le dispositif de renvoi de la ceinture de sécurité est en outre particulièrement adapté pour fournir un support fiable puisqu'il est conçu pour supporter des charges importantes.

De plus, l'organe d'accrochage, étant apte à être montée de manière amovible dans l'orifice arrondis à l'arrière du corps de renvoi, **il** se positionne facilement en tirant légèrement la sangle vers l'avant pour dégager complètement l'orifice arrondi.

Selon des modes de réalisation, un tel système de fixation peut comporter une ou plusieurs des caractéristiques suivantes.

Selon un mode de réalisation, l'organe d'accrochage est agencé pour être monté dans l'orifice arrondi avec un jeu de montage inférieur à une épaisseur de la sangle de la ceinture de sécurité. Ceci empêche la sangle de se coincer entre l'organe d'accrochage et le corps de renvoi.

Selon un mode de réalisation, l'organe d'accrochage comprend un corps métallique et un manchon protecteur en matériau polymère, le corps métallique comprenant un crochet destiné à l'accrochage du lien et un doigt qui est emmanché dans le manchon protecteur et est inséré avec ledit manchon protecteur dans ledit orifice arrondi. Ainsi, le manchon protecteur évite que l'organe d'accrochage n'endommage le corps de renvoi, par exemple en provoquant des rayures, et prévient le glissement de l'organe d'accrochage dans l'orifice arrondi.

Selon un mode de réalisation, le corps métallique est formé d'un fil métallique.

Selon un mode de réalisation, le manchon protecteur est équipé d'un ergot anti-basculement qui s'étend vers le bas du manchon protecteur et est destiné à venir en appui contre une surface d'appui du corps de renvoi qui est ménagée en-dessous de l'orifice arrondi, lorsque l'organe d'accrochage est monté dans ledit orifice arrondi. Ceci assure une fixation fiable de l'organe d'accrochage au corps de renvoi.

Selon un mode de réalisation, le manchon protecteur est réalisé dans un élastomère qui présente une dureté comprise entre 40 et 80 shore.

Selon un mode de réalisation, le manchon protecteur est en EPDM.

Selon un autre mode de réalisation, l'organe d'accrochage est formé d'un seul tenant dans un matériau polymère et comprend un corps pour accrocher le lien et un doigt qui est conçu pour être monté de manière amovible dans l'orifice arrondi.

Selon un mode de réalisation, l'organe d'accrochage est en polyamide renforcé de fibres. Ce matériau offre une résistance et une durabilité accrues.

Selon un mode de réalisation, le doigt comporte un cylindre creux apte à se déformer radialement pour entrer et sortir de l'orifice arrondi du corps de renvoi.

Selon un mode de réalisation, l'extrémité libre du doigt présente un cône d'entrée, ce qui facilite son montage.

Selon un mode de réalisation, le doigt présente une extrémité libre qui est dotée d'un ergot de retenue faisant saillie radialement et apte à être retenu contre une surface d'appui bordant l'orifice arrondi lorsque l'organe d'accrochage est monté dans ledit orifice arrondi. Ceci assure une fixation fiable de l'organe d'accrochage au corps de renvoi.

Selon un mode de réalisation, l'organe d'accrochage présente une surface de butée apte à s'appuyer contre une surface d'appui du corps de renvoi bordant le trou du corps de renvoi lorsque l'organe d'accrochage est monté dans ledit trou. Ceci limite le mouvement de l'organe d'accrochage dans la direction Y, empêchant ainsi tout contact de l'organe d'accrochage avec la garniture recouvrant le dispositif de renvoi de ceinture de sécurité.

Selon un mode de réalisation, le corps de renvoi présente un axe de symétrie vertical. Ceci lui permet une utilisation identique à gauche comme à droite du véhicule.

Selon un mode de réalisation, le corps de renvoi intègre un orifice de fixation à travers lequel un organe de fixation formant un point de pivot est inséré.

Selon un deuxième objet, il est proposé un véhicule automobile comprenant des montants latéraux et au moins un système de fixation du type précité, le dispositif de renvoi de ceinture de sécurité étant monté en rotation sur l'un des montants latéraux.

Selon des modes de réalisation, un tel véhicule automobile peut comporter une ou plusieurs des caractéristiques suivantes.

Selon un mode de réalisation, le véhicule automobile comprend un équipement, tel qu'une portion avant d'un sommier, et un lien qui est, d'une part, accroché à l'organe d'accrochage et, d'autre part, à l'équipement.

Selon un mode de réalisation, le lien est choisi parmi une sangle, une corde ou un câble.

### Brève description des figures

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique de dessus de l'habitacle d'un véhicule aménagé offrant un espace de couchage.
[Fig. 2] est une vue détaillée illustrant un dispositif de renvoi de ceinture de sécurité.
[Fig. 3] est une vue du dispositif de renvoi de ceinture de sécurité de la figure 2 dans laquelle la sangle n'est pas représentée.
[Fig. 4] est une vue en perspective d'un système de fixation selon un premier mode de réalisation, comprenant le dispositif de renvoi de ceinture de sécurité des figures 2 et 3 et un organe d'accrochage qui est fixé à ce dispositif et est destiné à l'accrochage du lien.
[Fig. 5] est une vue en coupe selon le plan transversal V-V de la figure 4 du système de fixation.
[Fig. 6] est une vue en coupe selon le plan VI-VI de la figure 5 du système de fixation.
[Fig. 7] est une vue de l'organe d'accrochage, représenté sur les figures 4 à 6, équipé d'une sangle.
[Fig. 8] est une vue de l'organe d'accrochage, représenté sur les figures 4 à 6, équipé d'une corde.
[Fig. 9] est une vue en coupe transversale similaire à celle de la figure 5 illustrant un système de fixation selon un second mode de réalisation.
[Fig. 10] est une vue en coupe selon le plan X-X de la figure 9 du système de fixation.
[Fig. 11] est une vue de l'organe d'accrochage, représenté sur les figures 9 et 10, équipé d'une sangle.

### Description des modes de réalisation

Les orientations exprimées dans la description sont données en référence à un repère orthonormé XYZ, représenté sur les figures, dans lequel X représente la direction longitudinale, orientée de l'avant vers l'arrière du véhicule, Y la direction transversale orientée vers la droite du véhicule, et Z la direction verticale orientée vers le haut du véhicule en position usuelle, reposant sur ses roues.

La figure 1 illustre l'habitacle 1 d'un véhicule aménagé, dans lequel la banquette arrière 2, représentée en traits pointillés, est convertible pour offrir un espace de couchage. Cette banquette arrière 2 est équipée d'un dispositif d'articulation, non représenté, permettant à son dossier 3 de pivoter et de se rabattre vers l'avant contre son assise. Dans cette position, le dossier 3 est sensiblement aligné au niveau du plancher 4 du coffre. Un sommier 5 qui est destiné à supporter un matelas est disposé de sorte à reposer sur le dossier 3 de la banquette arrière 2 et sur le plancher 4 du coffre. Le sommier 5 est, par exemple, constitué de plusieurs éléments articulés les uns aux autres. Le sommier 5 comporte une portion avant 6, représentée en traits mixtes, qui s'étend, en porte-à-faux, vers l'avant au-delà du dossier 3, offrant ainsi un soutien à la tête des utilisateurs.

Le sommier 5 est fixée au dossier 3 de la banquette arrière 2 ou au plancher 4 du coffre par divers moyens appropriés. Toutefois, afin d'assurer la stabilité de la portion avant 6 du sommier 5, qui s'étend en porte-à-faux, particulièrement en cas d'appui exercé par un utilisateur, celle-ci est supportée par des liens 7, tels que des sangles, câbles ou cordes. Chaque lien 7 est fixé, d'une part, à ladite partie avant 6, et, d'autre part, à un système de fixation 8 qui sera décrit par la suite. Ceci prévient efficacement tout basculement vers l'avant de la partie avant 6 du sommier 5, garantissant une utilisation sécurisée.

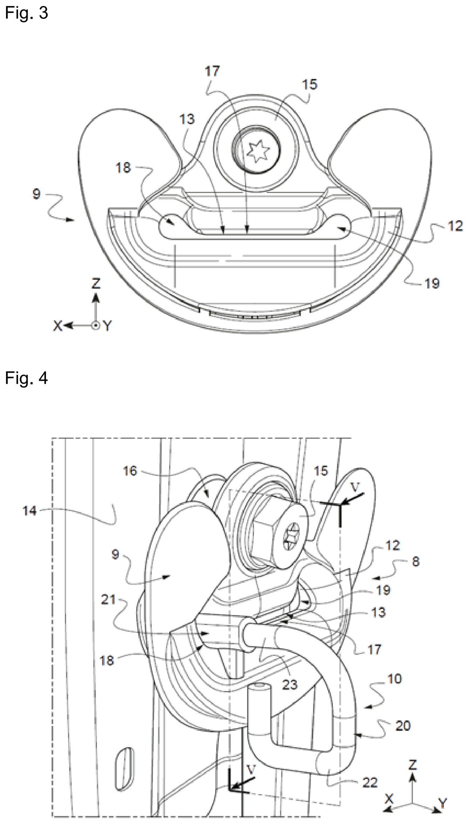

Le système de fixation 8 comprend un dispositif de renvoi de ceinture de sécurité 9, comme illustré aux figures 2 et 3, et un organe d'accrochage 10 d'un lien 7, dont un premier mode de réalisation est illustré sur les figures 4 à 7. Cet organe d'accrochage 10 est conçu pour être fixé au dispositif de renvoi de ceinture de sécurité 9, comme illustré par exemple sur la figure 4.

Le dispositif de renvoi de ceinture de sécurité 9 a pour fonction principale de guider la sangle 11 de la ceinture de sécurité entre une première extrémité enroulée autour d'un enrouleur et une seconde extrémité destinée à être fixée à la structure du véhicule. Le dispositif de renvoi de ceinture de sécurité 9 comprend un corps de renvoi 12, conçu pour guider la sangle 11 de la ceinture de sécurité. Le corps de renvoi 12 est équipé d'une ouverture de guidage 13 permettant le passage et le maintien de la sangle 11 dans une orientation définie.

Dans la variante de réalisation représentée, le dispositif de renvoi de ceinture de sécurité 9 est logé entre un montant latéral de la structure du véhicule et une garniture qui recouvre celui-ci. Dans ce cas, ladite garniture est équipée d'une ouverture 28, parfois désignée "sourire" en raison de son apparence incurvée et de la disposition arrondie de ses extrémités, au travers de laquelle passe la sangle 11 de la ceinture de sécurité. Cette ouverture 28 est schématisée en traits pointillés sur la figure 2.

Le corps de renvoi 12 intègre également un orifice de fixation à travers lequel un organe de fixation 15 est inséré. L'organe de fixation 15, ici une vis, est attaché à un montant latéral 14 de la structure du véhicule et forme un point de pivot autour duquel le corps de renvoi 12 est apte à pivoter. Pour ce faire, selon une réalisation, une entretoise 16, visible sur la figure 4, est positionnée entre le corps de renvoi 12 et le montant latéral 14, et autorise le corps de renvoi 12 à pivoter autour de l'axe défini par l'organe de fixation 15.

Comme illustré par exemple sur les figures 2 et 3, l'ouverture de guidage 13 présente une forme caractéristique. L'ouverture de guidage 13 comprend une fente centrale 17 qui s'étend jusqu'à deux orifices arrondis 18, 19 situés à ses extrémités. Ces orifices arrondis 18, 19 possèdent une dimension verticale plus grande que celle de la fente centrale 17. Les bords de l'ouverture de guidage 13 présentent des congés afin d'éviter les arêtes vives qui pourraient dégrader la sangle 11.

L'orifice arrondi 19 situé à l'avant de la fente centrale 17 est conçu pour recevoir le bord avant de la sangle 11 et permet à cette dernière de bénéficier d'une plus grande liberté de mouvement. Il contribue ainsi à assurer un guidage, même lorsque la sangle 11 est soumise à des mouvements brusques ou à des changements d'angle importants.

Le corps de renvoi 12 est symétrique par rapport à un axe vertical, ce qui permet une utilisation identique à gauche comme à droite. L'orifice arrondi 18 situé à l'arrière de la fente centrale 17 n'a donc pas réellement de rôle actif dans le guidage de la sangle 11, sa présence visant à assurer la réversibilité du corps de renvoi 12.

L'organe d'accrochage 10 est monté de manière amovible dans l'un des orifices arrondis 18, 19 du corps de renvoi 12, et en particulier celui, référencé 18, qui est situé à l'arrière. Ainsi, bien que l'organe d'accrochage 10 ne soit pas destiné à rester en position lors du roulage du véhicule, **il** ne perturberait pas le fonctionnement du dispositif de renvoi de la sangle 11 de sécurité si l'utilisateur oubliait de l'enlever. De plus, ce positionnement est simple, car **il** suffit de tirer légèrement la sangle 11 vers l'avant pour dégager complètement l'orifice arrondi 18. Enfin, cette position de l'organe d'accrochage 10 permet au lien de supporter la partie du sommier 5 disposée à l'arrière sans être gêné par la sangle 11 de la ceinture de sécurité.

Sous l'effet de la traction exercée par le lien 7 sur l'organe d'accrochage 10, en raison du poids du sommier 5 et de ses occupants, le corps de renvoi 12 pivote pour aligner l'orifice arrondi 18 et l'axe de pivotement du corps de renvoi 12 avec la direction de la traction. Cela réduit les contraintes sur le corps de renvoi 12, minimisant ainsi l'usure et les risques de déformation. Cette configuration améliore également la stabilité du sommier 5, assurant la sécurité et le confort des occupants.

Dans le premier mode de réalisation des figures 4 à 7, l'organe d'accrochage 10 comprend un corps métallique 20 et un manchon protecteur 21. Le corps métallique 20 est formé d'un fil métallique, en acier ou en aluminium par exemple, qui est façonné de sorte à former, d'une part, un crochet 22 destiné à l'accrochage du lien 7 et, d'autre part, un doigt 23 destiné à être inséré dans l'orifice arrondi 18.

Le manchon protecteur 21 est emmanché sur le doigt 23 du corps métallique 20. Le manchon protecteur 21 est, en outre, inséré à l'intérieur de l'orifice arrondi 18. Il vise, d'une part, à éviter que l'organe d'accrochage 10 ne cause des dégâts, comme des rayures, au corps de renvoi 12 et d'autre part, à prévenir un glissement de l'organe d'accrochage 10 dans l'orifice arrondi 18. Pour cela, le manchon protecteur 21 est réalisé en matériau polymère qui présente avantageusement une dureté comprise entre 40 et 80 shore et de préférence entre 50 et 70 shore. De manière avantageuse, ce matériau polymère est un élastomère, tel que l'EPDM (Éthylène-Propylène-Diène Monomère) par exemple.

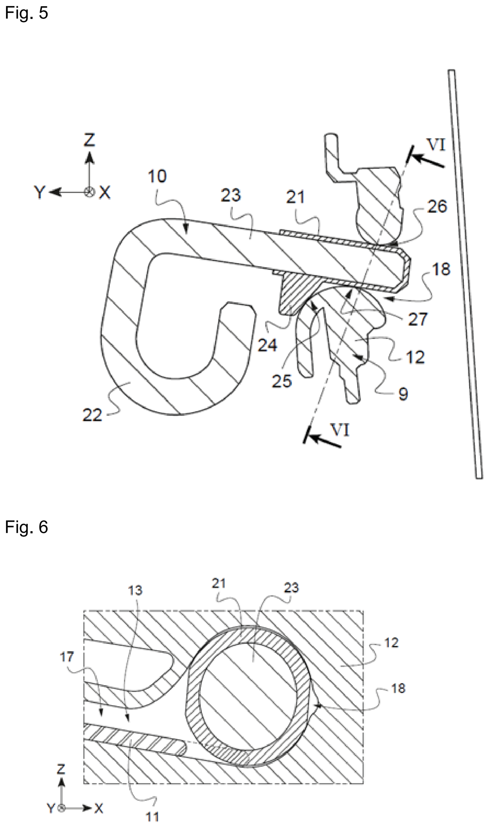

Comme illustré sur la figure 6, le jeu de montage entre le manchon protecteur 21 et l'orifice arrondi 18, c'est-à-dire la différence entre leurs diamètres respectifs, est inférieur à l'épaisseur de la sangle 11 de la ceinture de sécurité. Cette configuration empêche la sangle 11 de se coincer entre le manchon protecteur 21 et la surface interne de l'orifice arrondi 18 lorsque l'organe d'accrochage 10 est en place dans celui-ci.

Ainsi, selon un exemple de réalisation, l'orifice arrondi 18 présente un diamètre de 8,2 mm et le manchon protecteur 21 un diamètre de 8 mm de sorte que le jeu de montage entre ceux-ci ne permet pas à la sangle 11 de la ceinture qui présente une épaisseur de 0,8 à 1 mm de se coincer entre l'organe d'accrochage 10 et le corps de renvoi 12. Le fil métallique qui constitue le corps métallique 20 présente, par exemple, un diamètre de 4 ou 6 mm.

Par ailleurs, le manchon protecteur 21 est équipé d'un ergot anti-basculement 24, visible notamment sur les figures 4 et 5. Cet ergot anti-basculement 24 s'étend vers le bas du manchon protecteur 21. Il est ainsi destiné à venir en appui contre une surface d'appui 25 dirigée vers l'intérieur de l'habitacle 1 et ménagée en-dessous du bord inférieur de l'orifice arrondi 18, lorsque l'organe d'accrochage 10 est monté dans ledit orifice arrondi 18.

Ainsi, comme illustré sur la figure 5, le manchon protecteur 21 est à la fois en appui en haut et en bas de l'orifice arrondi 18 respectivement contre une surface d'appui supérieure 26 et une surface d'appui inférieure 27 tandis que l'ergot anti-basculement 24 est en appui contre la surface d'appui 25. Les surfaces d'appui 25, 26, 27 étant réparties le long de la direction longitudinale du doigt 23, elles empêchent un basculement de l'organe d'accrochage 10 autour d'un axe parallèle à l'axe longitudinale du véhicule sous l'effet de la traction exercée par le lien 7, due au poids du sommier 5 et de ses occupants.

En outre, dans une telle configuration, sous l'effet du poids du sommier 5 et de ses occupants, l'ergot anti-basculement 24 exerce une force contre sa surface d'appui 25, bloquant ainsi encore davantage le doigt 23 en position dans l'orifice arrondi 18.

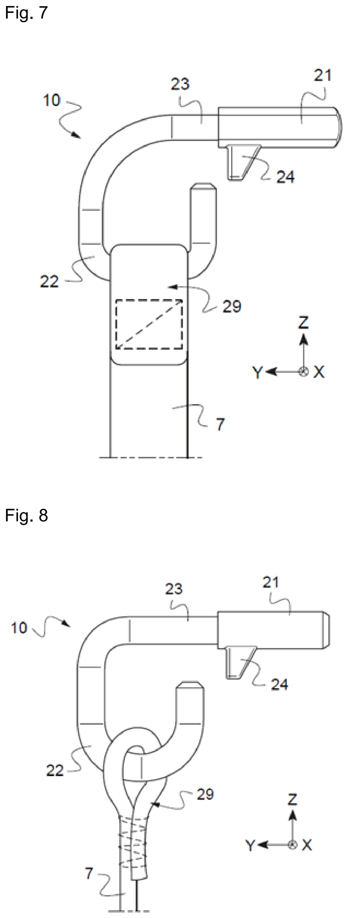

Dans la première variante de réalisation illustrée à la figure 7, le lien 7 est une sangle avec une extrémité équipée d'une boucle 29 qui s'enfile sur le crochet 22 du corps métallique 20 de l'organe d'accrochage 10. La boucle 29 est formée en pliant l'extrémité de la sangle et en la cousant. Dans une autre variante, non illustrée, la boucle 29 peut être formée à l'aide d'un mécanisme réglable, tel qu'une boucle de réglage, ce qui permet d'ajuster la longueur de la sangle et, par conséquent, de modifier l'inclinaison de la partie avant 6 du sommier 5.

Dans la seconde variante de réalisation, illustrée à la figure 8, le lien 7 est constitué d'une corde ou d'un câble avec une extrémité équipée d'une boucle 29. Cette boucle 29 est fixe sur la figure 8 mais peut également être réglable. Elle s'enfile sur le crochet 22 du corps métallique 20 de l'organe d'accrochage 10.

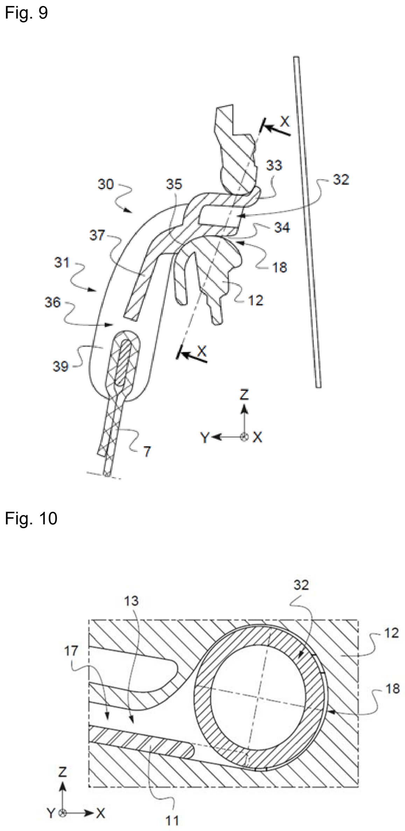

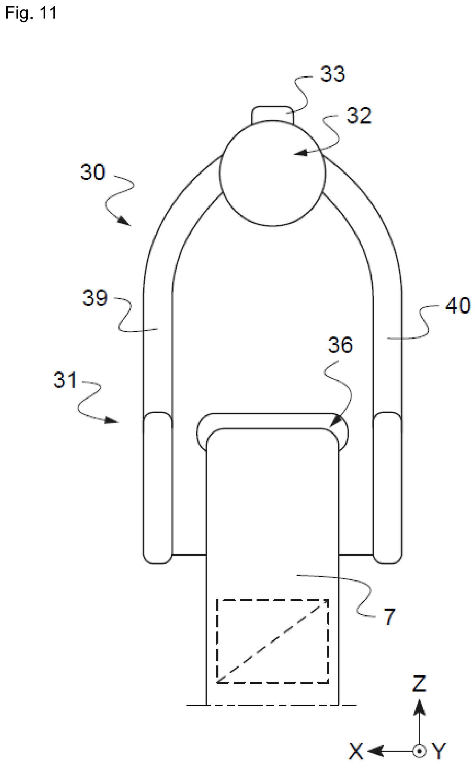

Les figures 9 à 11 illustrent un système de fixation 8 selon un second mode de réalisation. Ce système de fixation 8 diffère de celui décrit ci-dessus en relation avec les figures 4 à 7 par la structure de l'organe d'accrochage 30.

L'organe d'accrochage 30 est ici formé d'un seul tenant dans un matériau polymère. La matière polymère utilisée doit être une matière technique qui résiste au fluage à 80° (si le véhicule reste au soleil toute la journée sans fenêtre ouverte). Le matériau polymère peut par exemple être un polyamide renforcé de fibres, et notamment de fibres de verre, par exemple avec une composition incluant 30% en masse de fibres de verre (polyamide GF 30). Cela peut aussi être un polypropylène (PP GF40 ou 50) ou un Polycarbonate - Polybutylène Téréphtalate (PC-PBT).

L'organe d'accrochage 30 comprend un corps 31 pour accrocher le lien 7 et un doigt 32 qui fait saillie depuis le corps 31 et est conçu pour être inséré dans l'orifice arrondi 18. Comme illustré sur les figures 9 et 10, ce doigt 32 comprend un cylindre creux qui est apte à se déformer radialement pour entrer et sortir de l'orifice arrondi 18. Son extrémité libre est dotée d'un ergot de retenue 33 qui fait saillie radialement vers le haut, permettant ainsi d'être retenu contre une surface d'appui supérieure qui borde l'orifice arrondi 18. De manière avantageuse, l'extrémité libre du doigt 32 présente un cône d'entrée 34, c'est dire que le diamètre du doigt 32 augmente progressivement à partir de son extrémité, afin de faciliter son insertion dans l'orifice arrondi 18.

L'organe d'accrochage 30 possède également une surface de butée 35 destinée à s'appuyer contre une surface d'appui inférieure du corps de renvoi 12. La surface d'appui inférieure borde l'orifice arrondi 18 et est située sur la face intérieure du corps de renvoi 12. Cette surface de butée 35 limite le mouvement de l'organe d'accrochage 30 dans la direction Y, empêchant ainsi tout contact de l'organe d'accrochage 30 avec la garniture.

Le corps 31 de l'organe d'accrochage 30 s'étend vers le bas depuis le doigt 32. Il comporte un trou de passage 36 du lien 7, ici une fente, permettant de l'accrocher. Le trou de passage 36 est ici ménagé dans une portion centrale 37 du corps 31.

Le corps 31 comporte également deux flasques 39, 40 disposés de part et d'autre de la portion centrale 37. Les deux flasques 39, 40 forment des zones de préhension élargies facilitant la manipulation de l'organe d'accrochage 30, lors du montage ou démontage. Les bords des flasques 39, 40 sont arrondis, c'est-à-dire dépourvus d'angles saillants.

Par ailleurs, comme dans le mode de réalisation précédent, le jeu de montage entre le doigt 32 de l'organe d'accrochage 30 et l'orifice arrondi 18 est inférieur à l'épaisseur de la sangle 11 de la ceinture de sécurité.

Ce deuxième mode de réalisation est particulièrement envisagé lorsque l'orifice arrondi 18 a un diamètre plus grand. Par exemple, l'orifice arrondi 18 peut avoir un diamètre de 10,7 mm et le doigt 32 un diamètre de 10,2mm. Le jeu de montage empêche ainsi la sangle 11 de la ceinture, d'une épaisseur de 0,8 à 1 mm, de se coincer entre l'organe d'accrochage 30 et le corps de renvoi 12.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

En particulier, il convient de souligner que la structure du sommier 5 décrite ci-dessus est présentée à titre purement illustratif. Aussi, le système de fixation 8 pourra être adapté pour fixer un lien 7 destiné à supporter des sommier 5 présentant des caractéristiques différentes ou d'autres équipements.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Système de fixation (8) pour fixer à une structure d'un véhicule automobile un lien (7) destiné à soutenir un équipement, le système de fixation (8) comprenant :
- un dispositif de renvoi de ceinture de sécurité (9) comprenant une sangle (11) de ceinture de sécurité et un corps de renvoi (12) destiné à être fixé à la structure du véhicule, ledit corps de renvoi (12) comprenant une ouverture de guidage (13) au travers de laquelle passe la sangle (11), ladite ouverture de guidage (13) comprenant une fente centrale (17) s'étendant entre deux orifices arrondis (18, 19) ; et
- un organe d'accrochage (10, 30) pour accrocher le lien (7) qui est agencé pour être monté de manière amovible dans l'un des orifices arrondis (18).

2. Système de fixation selon la revendication 1, dans lequel l'organe d'accrochage (10, 30) est agencé pour être monté dans l'orifice arrondi (18) avec un jeu de montage inférieur à une épaisseur de la sangle (11) de la ceinture de sécurité.

3. Système de fixation (8) selon la revendication 1 ou 2, dans lequel l'organe d'accrochage (10) comprend un corps métallique (20) et un manchon protecteur (21) en matériau polymère, le corps métallique (20) comprenant un crochet (22) destiné à l'accrochage du lien (7) et un doigt (23) qui est emmanché dans le manchon protecteur (21) et est inséré avec ledit manchon protecteur (21) dans ledit orifice arrondi (18).

4. Système de fixation (8) selon la revendication 3, dans lequel le corps métallique (20) est formé d'un fil métallique.

5. Système de fixation (8) selon la revendication 3 ou 4, dans lequel le manchon protecteur (21) est équipé d'un ergot anti-basculement (24) qui s'étend vers le bas du manchon protecteur (21) et est destiné à venir en appui contre une surface d'appui (25) du corps de renvoi (12) qui est ménagée en-dessous de l'orifice arrondi (18), lorsque l'organe d'accrochage (10) est monté dans ledit orifice arrondi (18).

6. Système de fixation (8) selon l'une quelconque des revendications 3 à 5, dans lequel le manchon protecteur (21) est réalisé dans un élastomère qui présente une dureté comprise entre 40 et 80 shore.

7. Système de fixation selon la revendication 1, dans lequel l'organe d'accrochage (10) est formé d'un seul tenant dans un matériau polymère et comprend un corps (31) pour accrocher le lien (7) et un doigt (32) qui est conçu pour être monté de manière amovible dans l'orifice arrondi (18).

8. Système de fixation selon la revendication 6, dans lequel le doigt (32) comporte un cylindre creux apte à se déformer radialement pour entrer et sortir de l'orifice arrondi (18) du corps de renvoi (12).

9. Système de fixation (8) selon la revendication 7 ou 8, dans lequel le doigt (32) présente une extrémité libre qui est dotée d'un ergot de retenue (33) faisant saillie radialement et apte à être retenu contre une surface d'appui bordant l'orifice arrondi (18) lorsque l'organe d'accrochage (10) est monté dans ledit orifice arrondi (18).

10. Véhicule automobile comprenant des montants latéraux et au moins un système de fixation (8) selon l'une quelconque des revendications 1 à 9, le dispositif de renvoi de ceinture de sécurité (9) étant monté en rotation sur l'un des montants latéraux.
